# EUROPEAN PATENT SPECIFICATION

(11) **EP 3 524 099 B1**
(45) Date of publication and mention of the grant of the patent: **21.07.2021**
(21) Application number: 19155997.0
(22) Date of filing: 07.02.2019
(51) Int. Cl.: A47C 27/08

(54) **INFLATABLE PRODUCT**
AUFBLASBARES PRODUKT
PRODUIT GONFLABLE

(30) Priority: 12.02.2018 CN 201820252921 U; 24.12.2018 CN 201822168870 U
(43) Date of publication of application: 14.08.2019
(73) Proprietor: Bestway Inflatables & Material Corp., Shanghai 201812 (CN)
(72) Inventor: HUANG, Shuiyong, Shanghai 201812 (CN); FUMAGALLI, Patrizio, Shanghai 201812 (CN); WAGNER, Matthew, Shanghai 201812 (CN); VARTOLA, Matthew, Shanghai 201812 (CN); WU, Bingrong, Shanghai 201812 (CN); CHEN, Xinru, Shanghai 201812 (CN)
(74) Representative: Rupprecht, Kay

(56) References cited:
- JP-A- H01 230 303
- US-A1- 2012 031 265
- US-A1- 2015 096 126
- US-A1- 2017 196 368
- US-B2- 7 353 555

## Description

### CROSS REFERENCE TO RELATED APPLICATIONS

This application claims the benefit of Chinese patent application No. CN 201820252921.0, filed February 12, 2018, and Chinese patent application No. CN 201822168870.6, filed December 24, 2018.

### TECHNICAL FIELD

The present disclosure relates to an inflatable product with branch tension members.

### BACKGROUND

Inflatable products are widely used due to their advantages, such as portability, ease of storage and comfort. In order to maintain the inflatable product in a desired shape while inflated, tension members may be disposed within an air chamber of the inflatable product. Taking an inflatable mattress for example, in a conventional inflatable mattress including a top sheet and a bottom sheet, straight tension members or S-shaped tension members may be employed to directly connect the top sheet with the bottom sheet. After the inflatable mattress is inflated, the tension members apply vertical tensile force between the top and bottom sheets. However, seams where the tension members are connected to the top sheet or to the bottom sheet can be subjected to relatively concentrated forces. This can cause peeling between connections where the tension members are connected to the top sheet or to the bottom sheet. This can also cause tearing of the top sheet or the bottom sheet. In order to avoid these issues, some conventional inflatable device designs include additional tension members or a thickened top sheet or bottom sheet to improve the structural strength of the connections. These conventional inflatable devices result in increased production cost and increased weight.

In US 7,353,555 B2 an inflatable mattress is disclosed having a peripheral frame disposed around an upper periphery of the mattress forming an upper tubular periphery that provides a contiguous support surface.

US 2012/0031265 A1 describes an inflatable pad. The pad includes an inflatable pad body having a looped surrounding layer interconnecting top and bottom layers to cooperatively define an inflatable space.

In JP H01 230303 A a bag body is disclosed. The bag body consists of an upper surface sheet consisting of polyvinyl chloride sheet which possesses the airtightness and watertightness, a lower surface sheet, and a suspended cloth.

### SUMMARY

According to the invention, there is provided an inflatable product as claimed in claim 1. Preferred features of the invention are set out in the dependent claims.

The present disclosure provides for an inflatable product providing for distribution of force to tension members, which may result in reduced production cost and/or reduced weight when compared to conventional inflatable devices.

### BRIEF DESCRIPTION OF THE DRAWINGS

To understand the present disclosure, it will now be described by way of example, with reference to the accompanying drawings in which implementations of the disclosure are illustrated and, together with the description below, serve to explain the principles of the disclosure.
Fig. 1 is a perspective view of an exemplary inflatable mattress according to embodiments of the present disclosure, with a partial cutaway to show the internal structure of the inflatable mattress;
Fig. 2 is a partial enlarged view of the area A in Fig. 1;
Fig. 3 is a cut-away perspective view of the inflatable mattress shown in Fig. 1;
Fig. 4 is a cut-away perspective view of an exemplary inflatable mattress according to embodiments of the present disclosure;
Fig. 5 is a cut-away perspective view of another exemplary inflatable mattress according to embodiments of the present disclosure;
Fig. 6 is a cut-away perspective view of another exemplary inflatable mattress according to embodiments of the present disclosure;
Fig. 7 is a perspective view of an exemplary inflatable mattress according to embodiments of the present disclosure;
Fig. 8 is a top view of the exemplary inflatable mattress shown in Fig. 7;
Fig. 9 is a perspective view of the inflatable mattress shown in Fig. 7, with a partial cutaway to show the internal structure of the exemplary inflatable mattress;
Fig. 10 is a partial enlarged view of the area A in Fig. 9; and
Fig. 11 is a cut-away perspective view of the inflatable mattress shown in Fig. 9.

### DETAILED DESCRIPTION

The present disclosure provides exemplary embodiments of an inflatable product. The exemplary embodiments of the present disclosure are described below with reference to the drawings for illustration. It should be understood that the description about the exemplary embodiments should be considered as mere illustration of the structure and the principles of the inflatable product, and the invention of the present disclosure is not limited to the exemplary embodiments. The present invention may be any type or form of inflatable product, including, but not limited to, an inflatable mattress, an inflatable floating board, an inflatable pool, an inflatable surfboard, or any other desired inflatable product.

The terms "upper" and "lower," as used in the present disclosure, refer to structures that are disposed opposite one another, but which may be in one or more different orientations or positions when installed or used. The terms "left" and "right," as used in the present disclosure, are relative to a user laying on their back upon an inflatable mattress.

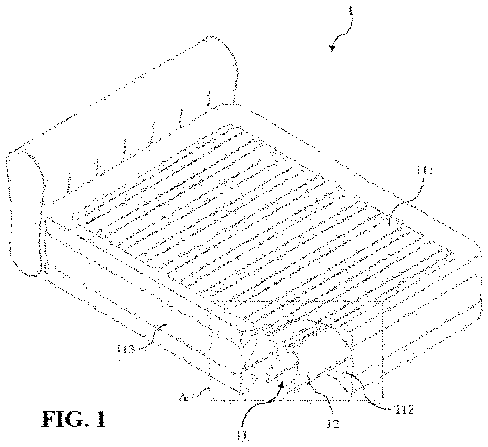

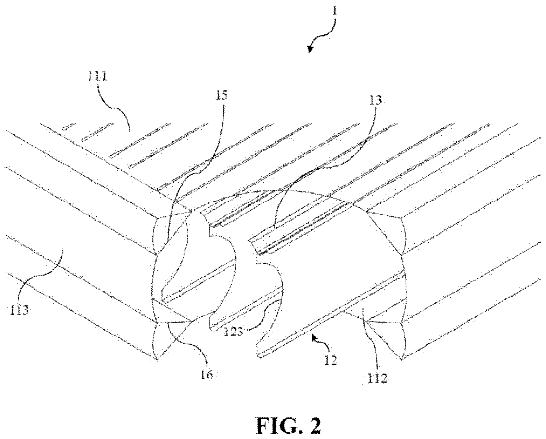

Fig. 1 shows an inflatable mattress 1 according to embodiments of the present disclosure. The inflatable mattress 1 includes a top sheet 111, a bottom sheet 112 and an enclosing sheet 113. The top sheet 111 and the bottom sheet 112 are parallel to each other. Each of the top sheet 111 and the bottom sheet 112 has an outer edge. The enclosing sheet 113 has an upper edge and a lower edge. The outer edge of the top sheet 111 is connected to the upper edge of the enclosing sheet 113 and the outer edge of the bottom sheet 112 is fixedly connected to the lower edge of the enclosing sheet 113, thus defining an air chamber 11. In other words, the top sheet 111, the bottom sheet 112 and the enclosing sheet 113 together enclose the air chamber 11. Multiple main tension members 12 are disposed within the air chamber 11. Each main tension member 12 has an upper edge and a lower edge. The upper edge of each main tension member 12 is provided with an upper branch tension member 13, as shown in Figs. 1 and 2. The enclosing sheet 113 may be a continuous long enclosing sheet. Alternatively, the enclosing sheet 113 may be formed by multiple pieces connected together. In some embodiments, the inflatable mattress 1 may not include an enclosing sheet 113, and the top sheet 111 may be connected directly to the bottom sheet 112 to enclose the air chamber 11.

In some embodiments, both the main tension member 12 and the upper branch tension member 13 have a unitary construction, which may be formed as flat sheets, such as for example, sheets of polyvinyl chloride (PVC) or any other desired material. The main tension member 12 is disposed within the air chamber 11 in a direction perpendicular to the top sheet 111 and to the bottom sheet 112. The main tension member 12 and the upper branch tension member 13 apply tensile force to the top sheet 111 and the bottom sheet 112 after the inflatable mattress 1 is inflated, thus maintaining the inflatable mattress 1 in a predetermined shape and preventing the inflatable mattress from expanding into other, undesired shapes.

The upper branch tension member 13 includes a first connection region, a second connection region, and a third connection region located between the first connection region and the second connection region. The first connection region and the second connection region are regions respectively adjacent to opposite sides of the branch tension member 13, and are symmetrically disposed with respect to the third connection region. The first connection region and the second connection region are connected to the inner surface of the top sheet 111, and the third connection region is connected to the upper edge of the main tension member 12. This will be described in more detail below. In an alternative embodiment, the first connection region and the second connection region of an upper branch tension member may also be disposed asymmetrically.

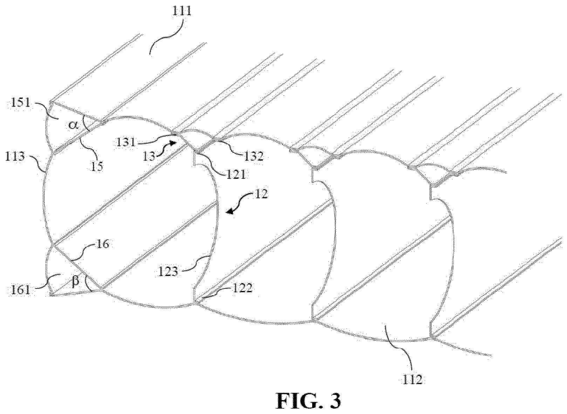

As shown in Fig. 3, the upper edge of the main tension member 12 is provided with an upper branch tension member 13. The first connection region and the second connection region of the upper branch tension member 13 may be welded to the inner surface of the top sheet 111. More specifically, a first weld 131 may be formed between the first connection region of the upper branch tension member 13 and the top sheet 111, and a second weld 132 may be formed between the second connection region of the upper branch tension member 13 and the top sheet 111. The third connection region of the upper branch tension member 13 may be welded to the upper edge of the main tension member 12. In particular, an upper edge weld 121 may be formed between the third connection region of the upper branch tension member 13 and the upper edge of the main tension member 12. The lower edge of the main tension member 12 may be welded to the inner surface of the bottom sheet 112. A lower edge weld 122 may be formed between the lower edge of the main tension member 12 and the inner surface of the bottom sheet 112. The first weld 131 and the second weld 132 may be symmetrically disposed with respect to the upper edge weld 121. For example, the first weld 131 and the second weld 132 may be disposed on opposite sides of the upper edge weld 121 and each an equal distance outwardly therefrom. In alternative embodiments, the first weld 131 and the second weld 132 may be disposed asymmetrically.

According to the invention an attachment strip is fixed along one or both of the upper edge and/or the lower edge of each of the main tension members 12 and extends away from the upper edge or the lower edge for a distance. The third connection region of the branch tension members 13 is connected along the distance of the attachment strip of the corresponding one of the main tension members 12. For example, as shown in Fig. 3, the branch tension members 13 may be connected to an attachment strip along the upper edge of a corresponding one of the main tension members 12 with an upper edge weld 121.

In some embodiments, the upper edge or the lower edge of the main tension member 12 may be connected to one of the branch tension members 13, while the other edge of the main tension member 12 may be connected to the inner surface of the bottom sheet 112 or the top sheet 111 by any other suitable means, such as an adhesive connection or a mechanical connection. In other words, a main tension member 12 may be paired with a single branch tension member 13 on the upper or lower edge of the main tension member 12, the other end of the main tension member 12 being coupled directly to either the top sheet 111 or the bottom sheet 112, as the case may be. The branch tension member 13 may be connected to the inner surface of the top sheet 111 or the bottom sheet 11, as the case may be, by any suitable means, such as an adhesive connection or a mechanical connection, such as welding by heat, ultrasonic, or any other suitable means.

When the air chamber 11 is inflated, the upper branch tension member 13 and the main tension member 12 are in a stretched state. In this state, the upper branch tension member 13 has a curved sheet shape, and the cross section of the upper branch tension member 13 and the main tension member 12 connected together has an approximate "Y" shape. After the air chamber 11 is deflated, the upper branch tension member 13 may be restored to a flat sheet shape (not shown), and which may include one or more folds. When the main tension member 12 is made of tarpaulin, and the upper branch tension member 13 is made of a polyvinyl chloride (PVC) material, the ratio of the height of the main tension member 12 in the non-inflated state to the distance between the top sheet 111 and the bottom sheet 112 in the inflated state may be (40 ± 2) / (46 ± 2). When the main tension member 12 is made of a PVC material and the upper branch tension member 13 is also made of a PVC material, the ratio of the height of the main tension member in the non-inflated state to the distance between the top sheet 111 and the bottom sheet 112 in the inflated state may be (39 ± 2) / (46 ± 2). By providing the upper branch tension member 13, the contact area between the upper branch tension member 13 and the top sheet 111 at the connection therebetween is increased, so that the tensile force per unit area withstood by the top sheet 111 at the connection is reduced, and the concentrated stress withstood by the top sheet 111 at the connection is eliminated. Additionally, the process for connecting the upper branch tension member 13 to the upper edge of the main tension member 12 is simple, and the connection has high structural strength.

In some exemplary embodiments, and as shown in Fig. 3, the upper edge weld 121 and the lower edge weld 122 may be located on a same side of the main tension member 12. The cross section of the upper edge weld 121, the lower edge weld 122, and the main tension member 12 therebetween has an approximately C-shape or a "[" shape. In other words, the edge welds 121, 122 are each on the same side of the main tension member 12 to which they are attached, and the edge welds 121, 122 are on the side of the main tension member 12 facing the lower, or foot end of the inflatable mattress 1, although the welds 121, 122 could be arranged at the head end of the inflatable mattress.

According to the invention the inflatable mattress 1 includes a first oblique tension member 15 and a second oblique tension member 16 which are disposed within the air chamber 11, as shown in Fig. 3. The oblique tension members 15, 16 may further reduce the tensile force per unit area withstood by the top sheet 111 and by the bottom sheet 112 at the connections. The first oblique tension member 15, the second oblique tension member 16, the main tension member 12, and/or the upper branch tension member 13 may be formed from flat sheets of material, such as PVC or any other desired film. Each of the first oblique tension member 15 and the second oblique tension member 16 have two opposite edges. According to the invention the first oblique tension member 15 and the second oblique tension member 16 are disposed within the air chamber 11.

The two opposite edges of the first oblique tension member 15 may be welded to the top sheet 111 and to the enclosing sheet 113, respectively. A first angle α is formed between the top sheet 111 and the upper surface of the first oblique tension member 15, as shown in Fig. 3. As also shown in Fig. 3, the first angle α is an acute angle. The first oblique tension member 15, the top sheet 111 and the enclosing sheet 113 may delimit a first chamber 151, and the first oblique tension member 15 may have a porous structure (not shown) such that the first chamber 151 is in fluid communication with the rest of the air chamber 11. According to the invention the two opposite edges of the first oblique tension member 15 are connected to the top sheet 111 and to the enclosing sheet 113, respectively, by any suitable means such as an adhesive connection or a mechanical connection.

The second oblique tension member 16 is disposed within the air chamber 11. The two opposite edges of the second oblique tension member 16 may be welded to the bottom sheet 112 and to the enclosing sheet 113, respectively. A second angle β is formed between the bottom sheet 112 and the lower surface of the second oblique tension member 16, as shown in Fig. 3. As also shown in Fig. 3, the second angle β is an acute angle. The second oblique tension member 16, the bottom sheet 112 and the enclosing sheet 113 may delimit a second chamber 161, and the second oblique tension member 16 has a porous structure (not shown) such that the second chamber 161 is in fluid communication with the rest of the air chamber 11. According to the invention the two opposite edges of the second oblique tension 16 member are connected to the bottom sheet 112 and to the enclosing sheet 113, respectively, by any suitable means, such as an adhesive connection or a mechanical connection.

In some embodiments, and as shown in Fig. 3, the main tension member 12 may have a left edge provided with a main tension member notch 123. When the inflatable mattress 1 is in the inflated state, the main tension member 12 is in a tensioned state. The force-bearing region along the left edge of the main tension member 12 can be increased by means of the main tension member notch 123, thereby reducing the tensile force on a single force bearing point of the left edge, in particular reducing the concentrated stress at the end of the upper edge weld 121 or at the end of the lower edge weld 122. Thus, the end of the upper edge weld 121, the end of the lower edge weld 122, or the left edge of the main tension member 12 can be prevented from being torn by excessive stress. Additionally, the main tension member notch 123 may also facilitate fluid communication within the air chamber 11. In other embodiments, the main tension member 12 may have a right edge provided with a main tension member notch to increase the force bearing region of the right edge, thereby reducing the tensile force on a single force bearing point of the right edge, in particular reducing the concentrated stress at the end of the upper edge weld 121 or at the end of the lower edge weld 122. Thus, the end of the upper edge weld, the end of the lower edge weld, or the right edge of the main tension member can be prevented from being torn by excessive stress and fluid communication within the air chamber can be further facilitated. Alternatively, only the right edge of the main tension member 12 is provided with a main tension member notch 123. In other embodiments, neither of the left edge and the right edge of the main tension member 12 is provided with a main tension member notch 123. In this case, the main tension member may have a porous structure to facilitate fluid communication within the air chamber. In the case that the left edge and/or the right edge of the main tension member 12 are provided with main tension member notches 123, the main tension member 12 may or may not have a porous structure. In other embodiments, the upper branch tension member 13 (or a lower branch tension member 13, if used, or alternatively both upper and lower branch tension members 13, if both used) may have a porous structure.

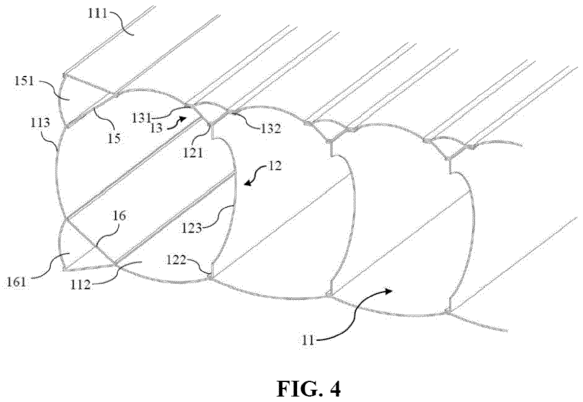

Fig. 4 shows a partial perspective view of an inflatable mattress according to exemplary embodiments of the present disclosure. The embodiments shown in Fig. 4 are similar to the embodiments shown in Fig. 3, except that the cross section of the upper edge weld 121, the lower edge weld 122 and the main tension member 12 are shaped as a mirror image to the corresponding structure of Figure 3. In other words, the upper edge weld 121, the lower edge weld 122 and the main tension member 12 shown in Fig. 3 has an approximate reverse-C shape or a "]" shape. In other words, the edge welds 121, 122 are each on the same side of the main tension member 12 to which they are attached, and the edge welds 121, 122 are on the side of the main tension member facing the upper, or head end of the inflatable mattress 1.

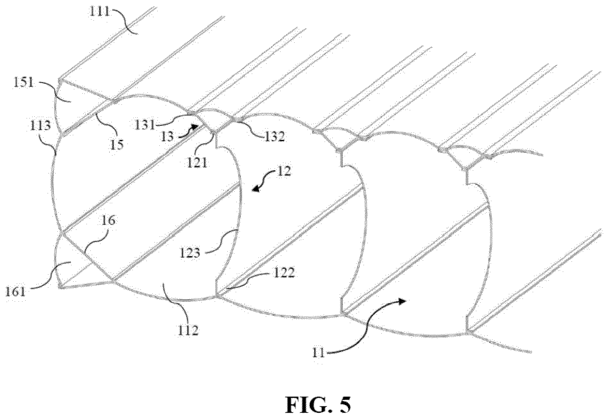

Fig. 5 shows a partial perspective view of an inflatable mattress according to another exemplary embodiment of the present disclosure. This exemplary embodiment is similar to the first exemplary embodiment, except that the upper edge weld 121 and the lower edge weld 122 are located on opposite sides of the main tension member 12 and the cross section of the upper edge weld 121, the lower edge weld 122, and the main tension member 12 therebetween has an approximate "Z" shape. In other words, the edge welds 121, 122 are each on opposite sides of the main tension member 12 to which they are attached.

In some embodiments, the branch tension members 13 may be disposed only on the upper edges of the main tension members 12. In alternative embodiments, the branch tension members 13 may be disposed only on the lower edges of the main tension members 12. That is, a lower branch tension member 13 may be disposed on the lower edge of the main tension member 12. The first connection region and the second connection region of the lower branch tension member 13 may be welded to the inner surface of the bottom sheet 112. The third connection region of the lower branch tension member 13 may be welded to the lower edge of the main tension member 12 to form a lower edge weld. The upper edge of the main tension member 12 may be welded directly to the inner surface of the top sheet 111 to form an upper edge weld. The cross section of the lower branch tension member 13 and the main tension member 12 connected together may, therefore, have an approximately inverted "Y" shape. The cross section of the upper edge weld, the lower edge weld, and the main tension member therebetween may have an approximate "[", "]" or "Z" shape.

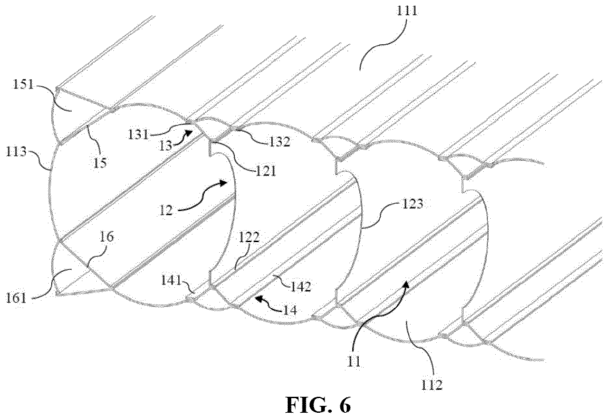

Fig. 6 shows a partial perspective view of an inflatable mattress according to exemplary embodiments of the present disclosure, showing both the upper edge and the lower edge of the main tension member 12 with branch tension members 13 and 14. Specifically, as shown in Fig. 6, in order to further reduce tensile force per unit area withstood by the top sheet 111 and by the bottom sheet 112, the branch tension members 13 may include an upper branch tension member 13 disposed on the upper edge of the main tension member 12 and a lower branch tension member 14 disposed on the lower edge of the main tension member 12. In certain embodiments, the upper branch tension members 13 and the lower branch tension members 14 are structurally similar, while in alternative embodiments, the upper branch tension members 13 and the lower branch tension members 14 may be structurally dissimilar. The first connection region and the second connection region of the upper branch tension member 13 are welded to the top sheet 111; a first weld 131 is formed between the first connection region of the upper branch tension member 13 and the inner surface of the top sheet 111, and a second weld 132 is formed between the second connection region of the upper branch tension member 13 and the inner surface of the top sheet 111; the third connection region of the upper branch tension member 13 is welded to the upper edge of the main tension member 12 to form an upper edge weld 121; the first weld 131 and the second weld 132 are symmetrically disposed with respect to the upper edge weld 121. The first connection region and the second connection region of the lower branch tension member 14 are welded to the bottom sheet 112; a third weld 141 is formed between the first connection region of the lower branch tension member 14 and the inner surface of the bottom sheet 112, and a fourth weld 142 is formed between the second connection region of the lower branch tension member 14 and the inner surface of the bottom sheet 112; the third connection region of the lower branch tension member 14 is welded to the lower edge of the main tension member 12 to form a lower edge weld 122; the third weld 141 and the fourth weld 142 are symmetrically disposed with respect to the lower edge weld 122. In some alternative embodiments, the first weld 131 and the second weld 132 may be asymmetrically disposed with respect to the upper edge weld 121. Alternatively or additionally, the third weld 141 and the fourth weld 142 may be asymmetrically disposed with respect to the lower edge weld 122.

After the air chamber 11 is inflated, the upper branch tension member 13, the main tension member 12 and the lower branch tension member 14 may be in a stretched state, such as the configuration shown in Fig. 6. In this state, both the upper branch tension member 13 and the lower branch tension member 14 have a curved shape, and the cross section of the upper branch tension member 13, the main tension member 12 and the lower branch tension member 14 connected together has an approximate "X" shape. More precisely, the upper branch tension member 13, the main tension member 12 and the lower branch tension member 14, connected together, has a double-Y shaped cross section. After the air chamber 11 is deflated, the upper branch tension member 13 and the lower branch tension member 14 may be restored to have flat sheet shape (not shown). In some embodiments, the main tension member 12 may be made of tarpaulin, which may include, for example, one or more sheets of polyethylene, PVC, and/or scrim, PVC, and/or scrim (or any other desired material), and the upper branch tension member 13 and the lower branch tension member 14 may be made of PVC or any other desired material. In embodiments where the main tension member 12 is made of tarpaulin, the ratio of the height of the main tension member 12 in the non-inflated state to the distance between the top sheet 111 and the bottom sheet 112 in the inflated state may be (35 ± 2) / (46 ± 2). In some embodiments, the main tension member 12 may be made of PVC material and the upper branch tension member 13 and the lower branch tension member 14 may also be made of PVC material. In embodiments where the main tension member 12 is made of PVC material, the ratio of the height of the main tension member 12 in the non-inflated state to the distance between the top sheet 111 and the bottom sheet 112 in the inflated state may be (34 ± 2) / (46 ± 2).

The combination of the upper branch tension member 13 and the lower branch tension member 14 may provide for an increased area of connection at the top sheet 111 and the bottom sheet 112, so that the tensile force per unit area withstood by the top sheet 111 and by the bottom sheet 112 at the connections is reduced when compared with alternative designs. Furthermore, one or both of the upper branch tension member 13 and the lower branch tension member 14 may distribute forces to the top sheet 111 and/or the bottom sheet 112, thereby eliminating concentrated stresses at the connections. The upper branch tension member 13 and/or the lower branch tension member 14 may be easily connected to the upper edge and the lower edge of the main tension member 12, respectively, and the connections may have high structural strength.

In some embodiments, the upper branch tension member 13 may be respectively connected to the top sheet 111 and/or to the upper edge of the main tension member 12 by an adhesive connection or a mechanical connection. In some embodiments, the main tension member 12 may be connected directly to the top sheet 111 or to the bottom sheet 112 by an adhesive connection or mechanical connection. In some embodiments, the lower branch tension member 14 may be connected to the bottom sheet 112 and/or to the lower edge of the main tension member 12 by an adhesive connection or a mechanical connection.

In some embodiments, and as shown in Fig. 6, the upper edge weld 121 and the lower edge weld 122 may be located on a same side of the main tension member 12. The cross section of the upper edge weld 121, the lower edge weld 122, and the main tension member 12 therebetween may have an approximate "[" shape. In some other embodiments, the cross section of the upper edge weld, the lower edge weld, and the main tension member therebetween may have an approximate "]" shape. In other, alternative, embodiments, the upper edge weld and the lower edge weld may be located on opposite sides of the main tension member 12. The cross section of the upper edge weld 121, the lower edge weld 122, and the main tension member 12 therebetween may, therefore, have an approximate "Z" shape.

In some exemplary embodiments, the upper branch tension member 13 and/or the lower branch tension member 14 may be shaped as generally thin, flat sheets. In other words, they may be formed from a relatively thin, flat material. In some embodiments, the upper branch tension member 13 and/or the lower branch tension member 14 may be formed into a 3-dimensional shape, such as the generally triangular cross-sections shown in Figure 6. The upper branch tension member 13 may be formed by tailoring a continuous one-piece layer made of PVC or tarpaulin (or any other desired material), which may include, for example, one or more sheets of polyethylene, PVC, and/or scrim (or any other desired material). In some embodiments, the lower branch tension member 14 may be formed by tailoring a continuous one-piece layer made of PVC or tarpaulin (or any other desired material), which may include, for example, one or more sheets of polyethylene, PVC, and/or scrim (or any other desired material). In some embodiments, the upper branch tension member 13 and/or the lower branch tension member 14 may be formed of a woven material, which may be made of, for example, polyethylene, PVC, and/or scrim (or any other desired material).

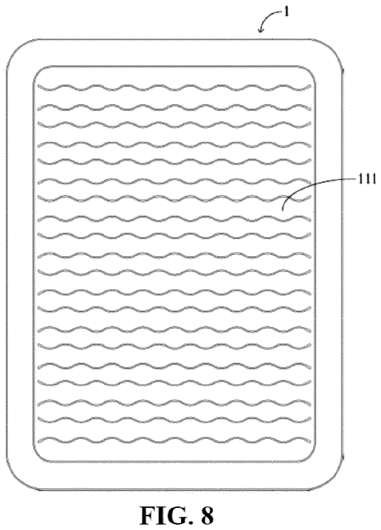

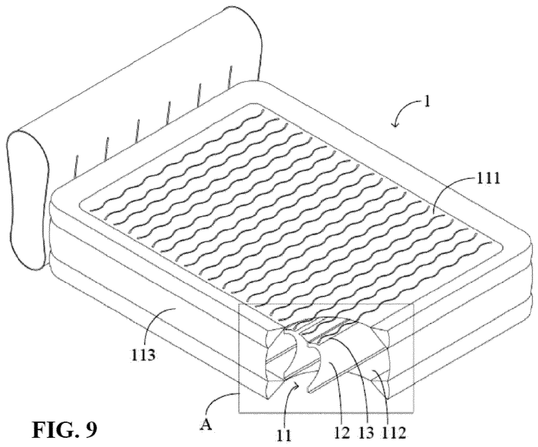

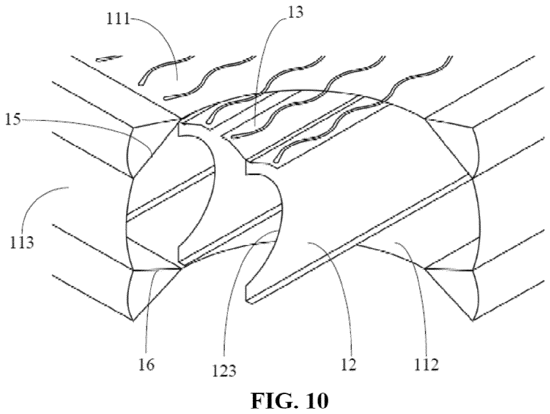

In some embodiments, and as shown in Figs. 1-11, each main tension member 12 is disconnected from each of the other main tension members 12 except for connection through one or both of the top sheet 111 and the bottom sheet 112.

The branch tension members of the inflatable product of the present disclosure may substantially reduce tensile force per unit area on one or both of the top sheet and/or the bottom sheet at the connections. Furthermore, concentrated stress on one or both of the top sheet and/or the bottom sheet at the connections may be eliminated. The oblique tension members may further reduce the tensile force per unit area on the top sheet and/or the bottom sheet at the connections. Additionally, the branch tension members and/or the oblique tension members within the air chamber may be manufactured and installed using a simple process.

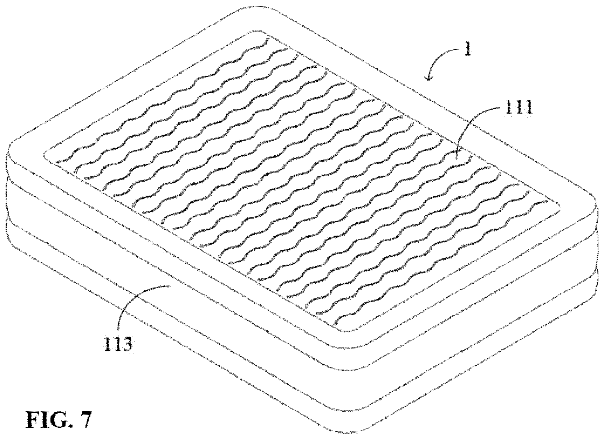

In some embodiments, one or both of the first connection region and/or the second connection region of the branch tension members forms an embossed connection with one of the first wall or the second wall. In some embodiments, and as shown in Figs. 1-6, the embossed connections are visible to a user of the inflatable mattress and appear as straight lines. In other embodiments, and as shown in Figs. 7-11, the embossed connections may appear as wavy lines. The embossed connections may define other patterns such as, for example, geometric patterns or shapes.

Figs. 7-11 show an inflatable mattress 1 according to some exemplary embodiments of the present disclosure. The inflatable mattress 1 shown in Figs. 7-11 is similar to the inflatable mattress 1 shown in Figs 1-6, with a regular pattern on the top sheet 111. More specifically, the inflatable mattress 1 shown in Figs 7-11 includes a first weld 131 and a second weld 132 which each extend along and oscillate transverse to the length of a corresponding one of the main tension members 12 in order to attach the first connection region and the second connection region of the upper branch tension member 13 to the top sheet 111. In this way, the first weld 131 and the second weld 132 define a wavy pattern that may be visible to a user of the inflatable product. These so-called "wavy welds" may serve to increase the length of the connection between upper branch tension member 13 and the top sheet 111, thereby making the connection stronger. The wavy welds may further distribute forces to the top sheet 111, which may provide the inflatable mattress 1 with a flatter upper surface, and which may be more comfortable for users. The wavy welds may also provide the inflatable mattress 1 with improved aesthetics. The wavy welds may be sinusoidal, as shown in Figs. 7-11. The first weld 131 and/or the second weld 132 may define other patterns such as, for example, triangular, sawtooth, square waves, (or any other desired pattern).

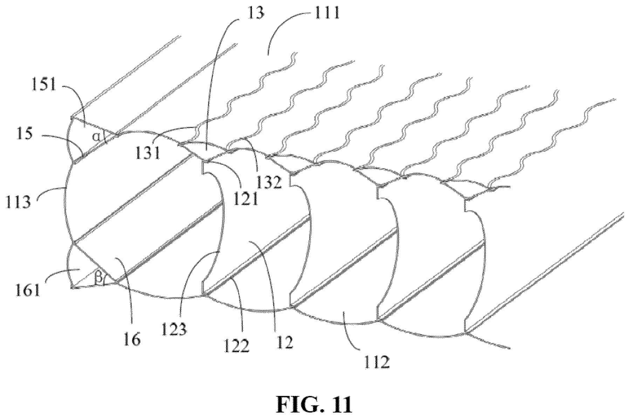

In some embodiments, and as shown in Fig. 11, wavy welds formed along the first connection region and the second connection region of a common one of the branch tension members 13 may be opposite in phase. In other words, a point in the wavy weld formed along the first connection region at a given distance in a first direction transverse to the corresponding one of the main tension members 12 may be aligned with a corresponding point in the wavy weld formed along the second connection region having the same given distance transverse to the corresponding one of the main tension members 12 in a second direction opposite the first direction. Alternatively, one or more of the wavy welds formed along the first connection region and the second connection region of a common one of the branch tension members 13 may be in phase with one another. In some embodiments, and as also shown in Fig. 11, adjacent wavy welds formed along adjacent connection regions of different ones of the branch tension members 13 may be opposite in phase. Alternatively, adjacent wavy welds formed along adjacent connection regions of different ones of the branch tension members 13 may be in phase with one another.

The first weld 131 and the second weld 132 may be symmetrically disposed with respect to the upper edge weld 121. In other words, where the first and second welds 131, 132 are wavy welds, they may have identical periods, amplitudes, and average distances to the upper edge weld 121. In an alternative embodiment, the first weld 131 and the second weld 132 may be disposed asymmetrically with respect to the upper edge weld 121. In other words, the two wavy welds may have different periods, amplitudes, or average distances away from the upper edge weld 121.

## Claims

1. An inflatable product (1), comprising:
a first wall (111) and a second wall (112) extending parallel to and spaced apart from the first wall (111) and defining an air chamber (11) between the first wall (111) and the second wall (112);
a plurality of main tension members (12) extending along a length within the air chamber (11), each of the main tension members (12) extending orthogonally to the first wall (111) between an upper edge (121) and a lower edge (122) of the main tension member (12), with the lower edge (122) extending parallel to and
spaced apart from the upper edge (121);
a plurality of branch tension members (13, 14), with each branch tension member (13,14) of the plurality of branch tension members (13, 14) extending along a corresponding one of the main tension members (12), each of the branch tension members (13, 14) having a unitary construction comprising a first connection region, a second connection region, and a third connection region located between the first connection region and the second connection region, the first connection region and the second connection region being connected to one of the first wall (111) or the second wall (112), and the third connection region being connected to the corresponding one of the main tension members (12); and
wherein each main tension member (12) of the plurality of main tension members (12) is disconnected from each of the other main tension members (12) except for connection through one or both of the first wall (111) and the second wall (112);
an attachment strip fixed along one of the upper edge (121) or the lower edge (122) of each of the main tension members (12) and extending away from the one of the upper edge (121) or the lower edge (122) for a distance; and
wherein the third connection region of each of the branch tension members (13,14) is connected to the corresponding one of the main tension members (12) via the attachment strip fixed along the one of the upper edge (121) or the lower edge (122) of the corresponding one of the main tension members (12);
wherein each of the attachment strips is integrally formed with one of the main tension members (12); and
wherein each of the main tension members (12) includes a crease along one of the upper edge (121) or the lower edge (122) to define the attachment strip fixed therealong;
wherein the inflatable product (1) further comprises an enclosing sheet (113) extending between the first wall (111) and the second wall (112) and along a peripheral edge of each of the first wall (111) and the second wall (112) to define the air chamber (11) between the first wall (111) and the second wall (112);
wherein the inflatable product (1) further comprises a first oblique tension member (15) extending between two opposite edges, with the two opposite edges of the first oblique tension member (15) respectively attached to the enclosing sheet (113) and to the first wall (111) defining a first angle (α) between the first wall (111) and the first oblique tension member (15), with the first angle (α) being an acute angle; and
**characterized in that** a second oblique tension member (16) extends between two opposite edges, with the two opposite edges of the second oblique tension member (16) respectively attached to the enclosing sheet (113) and to the second wall (112) defining a second angle (β) between the second wall (112) and the second oblique tension member (16), with the second angle (β) being an acute angle.

2. The inflatable product according to claim 1, wherein:
the upper edge of each of the main tension members (12) has one of the attachment strips extending therealong to form an upper edge weld (121);
the lower edge of each of the main tension members (12) has one of the attachment strips extending therealong to form a lower edge weld (122); and
the one of the attachment strips forming the upper edge weld (121) is located on a same side of the corresponding one of the main tension members as the one of the attachment strips forming the lower edge weld (122).

3. The inflatable product according to claim 1, wherein:
the upper edge of each of the main tension members (12) has one of the attachment strips extending therealong to form an upper edge weld (121);
the lower edge of each of the main tension members (12) has one of the attachment strips extending therealong to form a lower edge weld (122); and
the one of the attachment strips forming the upper edge weld (121) is located on an opposite side of the corresponding one of the main tension members (12) as the one of the attachment strips forming the lower edge weld (122).

4. The inflatable product according to claim 1, wherein each of the first connection region and the second connection region of the branch tension members (14) forms an embossed connection with the one of the first wall (111) or the second wall (112), with the embossed connection being visible to a user of the inflatable product.

5. The inflatable product according to claim 1, wherein the first connection region and the second connection region are connected to the one of the first wall (111) or the second wall (112) with a wavy weld extending along the length of a corresponding one of the main tension members (12), with the wavy weld being visible to a user of the inflatable product and defining a regular pattern extending along and oscillating transverse to the length of the corresponding one of the main tension members.

6. The inflatable product according to claim 5, wherein wavy welds formed along the first connection region and the second connection region of a common one of the branch tension members (14) are opposite in phase.

7. The inflatable product according to claim 5, wherein adjacent wavy welds formed along adjacent connection regions of different ones of the branch tension members are opposite in phase.

8. The inflatable product according to claim 1, wherein the branch tension members (14) are shaped as generally thin, flat sheets.

9. The inflatable product according to claim 1, wherein the first connection region and the second connection region are symmetrically disposed with respect to the third connection region.

10. The inflatable product according to claim 1, wherein each branch tension member (14) of the plurality of branch tension members (14) comprises an upper branch tension member (13) disposed on the upper edge of each main tension member (12) and a lower branch tension member disposed on the lower edge of each main tension member (12);
wherein each of the upper branch tension members (13) comprises the first connection region and the second connection region each attached to the first wall; and
wherein each of the lower branch tension members (14) comprises the first connection region and the second connection region each attached to the second wall.

## Patentansprüche

1. Ein aufblasbares Produkt (1), aufweisend:
eine erste Wand (111) und eine zweite Wand (112), die sich parallel zur und mit Abstand von der ersten Wand (111) erstreckt und eine Luftkammer (11) zwischen der ersten Wand (111) und der zweiten Wand (112) bildet;
eine Vielzahl von Hauptzuggliedern (12), die sich entlang einer Länge innerhalb der Luftkammer (11) erstrecken, wobei sich jedes der Hauptzugglieder (12) orthogonal zur ersten Wand (111) zwischen einer Oberkante (121) und einer Unterkante (122) der Hauptzugglieder (12) ausdehnt, wobei sich die Unterkante (122) parallel zu und beabstandet von der Oberkante (121) erstreckt;
eine Vielzahl von Abzweigungszuggliedern (13,14), wobei sich jedes Abzweigungszugglied (13,14) der Vielzahl der Abzweigungszugglieder (13,14) entlang eines korrespondierenden Hauptzuggliedes (12) erstreckt, wobei jedes der Abzweigungszugglieder (13,14) eine einheitliche Konstruktion aufweist, die einen ersten Verbindungsbereich, einen zweiten Verbindungsbereich, und einen zwischen dem ersten Verbindungsbereich und dem zweiten Verbindungsbereich angeordneten dritten Verbindungsbereich aufweist, wobei der erste Verbindungsbereich und der zweite Verbindungsbereich mit der ersten Wand (111) oder der zweiten Wand (112) und der dritte Verbindungsbereich mit dem korrespondierenden Hauptzugglied (12) verbunden ist; und
wobei jedes der Hauptzugglieder (12) der Vielzahl der Hauptzugglieder (12) von jeweils dem der anderen Hauptzugglieder (12) getrennt ist bis auf die Verbindung durch eine oder beide der ersten Wand (111) und der zweiten Wand (112);
ein Befestigungsstreifen der entlang einer der Oberkanten (121) oder der Unterkanten (122) jedes der Hauptzugglieder (12) befestigt ist und sich von der einen der Oberkante (121) oder der Unterkante (122) um eine Strecke weg erstreckt; und
wobei der dritte Verbindungsbereich jedes der Abzweigungszugglieder (13,14) mit dem korrespondierenden Hauptzugglied (12) über den Befestigungsstreifen, der entlang der Oberkante (121) oder der Unterkante (122) des korrespondierenden Hauptzuggliedes (12) befestigt ist, verbunden ist; wobei jeder der Befestigungsstreifen mit einem der Hauptzugglieder (12) integral gebildet wird; und
wobei jedes der Hauptzugglieder (12) eine Falte entlang der Oberkante (121) oder der Unterkante (122) aufweist, um den Befestigungsstreifen zu definieren, der dort entlang befestigt ist;
wobei das aufblasbare Produkt (1) weiterhin ein Umschließungsblatt (113) aufweist, das sich zwischen der ersten Wand (111) und der zweiten Wand (112) und entlang einer peripheren Kante der ersten Wand (111) und der zweiten Wand (112) erstreckt, um die Luftkammer (11) zwischen der ersten Wand (111) und der zweiten Wand (112) auszubilden;
wobei das aufblasbare Produkt (1) weiterhin ein erstes Schrägzugglied (15) aufweist, das sich zwischen zwei gegenüberliegenden Kanten erstreckt, wobei die zwei gegenüber liegenden Kanten des ersten Schrägzugglieds (15) jeweils an dem Umschließungsblatt (113) und der ersten Wand (111) befestigt sind, einen ersten Winkel (α) zwischen der ersten Wand (111) und dem ersten Schrägzugglied (15) ausbildend, wobei der erste Winkel (α) ein spitzer Winkel ist; und
**dadurch gekennzeichnet,**
**dass** sich ein zweites Schrägzugglied (16) zwischen zwei gegenüber liegenden Kanten erstreckt, wobei die beiden gegenüber liegenden Kanten des zweiten Schrägzugglieds (16) jeweils an dem Umschließungsblatt (113) und an der zweiten Wand (112) befestigt sind, dabei einen zweiten Winkel (ß) zwischen der zweiten Wand (112) und dem zweiten Schrägzugglied (16) ausbildend, wobei der zweite Winkel (ß) ein spitzer Winkel ist.

2. Das aufblasbare Produkt nach Anspruch 1,
wobei die Oberkante (121) von jedem der Hauptzugglieder (12) einen der Befestigungsstreifen aufweist, der sich dort entlang erstreckt, um eine Oberkantenschweissung (121) auszubilden;
die Unterkante (122) von jedem der Hauptzugglieder (12) einen der Befestigungsstreifen aufweist, der sich dort entlang erstreckt, um eine Unterkantenschweissung (122) auszubilden; und
sich der eine der Befestigungsstreifen, der die Oberkantenschweissung (121) ausbildet, auf einer selben Seite des korrespondierenden Hauptzuggliedes befindet wie der Befestigungsstreifen, welcher die Unterkantenschweissung (122) ausbildet.

3. Das aufblasbare Produkt nach Anspruch 1,
wobei die Oberkante (121) eines der Hauptzugglieder (12) einen der Befestigungsstreifen aufweist, der sich dort entlang erstreckt, um eine Oberkantenschweissung (121) auszubilden;
die Unterkante (122) eines jeden der Hauptzugglieder (12) einen der Befestigungsstreifen aufweist, der sich dort entlang erstreckt, um eine Unterkantenschweissung (122) zu bilden; und
sich der eine der Befestigungsstreifen, der die Oberkantenschweissung (121) ausbildet, auf einer selben Seite des korrespondierenden Hauptzuggliedes befindet wie der Befestigungsstreifen, welcher die Unterkantenschweissung (122) ausbildet.

4. Das aufblasbare Produkt nach Anspruch 1,
wobei sowohl der erste Verbindungsbereich und der zweite Verbindungsbereich der Abzweigzugsglieder (14) eine geprägte Verbindung mit der ersten Wand (111) oder der zweiten Wand (112) ausbilden, wobei die geprägte Verbindung für den Benutzer des aufblasbaren Produktes sichtbar ist.

5. Das aufblasbare Produkt nach Anspruch 1,
wobei der erste Verbindungsbereich und der zweite Verbindungsbereich mit der ersten Wand (111) oder der zweiten Wand (112) mit einer Wellenschweißnaht verbunden sind, die entlang der Länge eines korrespondierenden Hauptzuggliedes (12) verläuft, wobei die Wellenschweißnaht für einen Benutzer des aufblasbaren Produkts sichtbar ist und ein gleichmässiges Muster bildet, das sich entlang der und oszillierend quer zur Länge des korrespondierenden Hauptzuggliedes (12) erstreckt.

6. Das aufblasbare Produkt nach Anspruch 5,
wobei die Wellenschweissnähte entlang des ersten Verbindungsbereichs und des zweiten Verbindungsbereichs von einem gemeinsamen Verbindungsbereich der Abzweigungszugglieder (14) in Gegenphase verlaufen.

7. Das aufblasbare Produkt nach Anspruch 5,
wobei sich benachbarte Wellenschweissnähte, die sich entlang benachbarter Verbindungsregionen von verschiedenen Abzweigungszuggliedern gebildet haben, in Gegenphase verlaufen.

8. Das aufblasbare Produkt nach Anspruch 1,
wobei die Abzweigungszugglieder (14) als im Wesentlichen dünne, flache Bögen geformt sind.

9. Das aufblasbare Produkt nach Anspruch 1,
wobei der erste Verbindungsbereich und der zweiteVerbindungsbereich mit Bezug auf den dritten Verbindungsbereich symmetrisch angeordnet sind.

10. Das aufblasbare Produkt nach Anspruch 1,
wobei jedes Abzweigungszugglied (14) der Vielzahl der Abzweigungszugglieder (14) ein oberes Abzweigungszugglied (13), angeordnet an der Oberkante (121) von jedem Hauptzugglied (12) und ein unteres Abzweigungszugglied, angeordnet an der Unterkante (122) von jedem Hauptzugglied (12), aufweist;
wobei jedes der oberen Abzweigungszugglieder (13) den ersten Verbindungsbereich und den zweiten Verbindungsbereich aufweist, wobei jede an der ersten Wand befestigt ist; und
wobei jedes der unteren Abzweigungszugglieder (14) den ersten Verbindungsbereich und den zweiten Verbindungsbereich aufweist, wobei jedes an der zweiten Wand befestigt ist.

## Revendications

1. Un produit gonflable comprenant:
une première paroi (111) et une seconde paroi (112) s'étendant parallèlement à et à distance de la première paroi et définissant une chambre d'air (11) entre la première paroi (111) et la seconde paroi (112);
une pluralité de membres de tension principaux (12) s'étendant sur une longueur dans la chambre d'air (11),
chacun des membres de tension principaux (12) s'étendant orthogonalement à la première paroi (111) entre un bord supérieur (121) et un bord inférieur (122) du membre de tension principaux (12), le bord inférieur (122) s'étendant parallèlement au et à distance du bord supérieur (121);
une pluralité de membres de tension de branche (13, 14), avec chacun des membres de tension de branche (13, 14) de la pluralité de membres de tension de branche (13, 14) s'étendant le long du correspondant des membres de tension principaux (12), chacun des membres de tension de branche (13, 14) ayant une construction unitaire comprenant une première région de raccordement, une seconde région de raccordement, et une troisième région de raccordement située entre la première région de raccordement et la seconde région de raccordement, la première région de raccordement et la seconde région de raccordement étant reliées à une de la première paroi (111) ou de la seconde paroi (112), et la troisième région de raccordement étant reliée au correspondant des membres de tension principaux (12); et
dans lequel chacun des membres de tension principaux (12) de la pluralité de membres de tension principaux (12) est déconnecté de chacun des autres membres de tension principaux (12), sauf pour le raccordement par une ou les deux de la première paroi (111) et de la seconde paroi (112);
une bande de fixation étant fixée le long d'un du bord supérieur (121) ou du bord inférieur (122) de chacun des membres de tension principaux (12) et s'éloignant de celui du bord supérieur (121) ou du bord inférieur (122) à une distance; et
dans lequel la troisième région de raccordement de chacun des membres de tension de branche (13, 14) est reliée au correspondant des membres de tension principaux par la bande de fixation fixée le long d'un du bord supérieur (121) ou du bord inférieur (122) du correspondant des membres de tension principaux (12);
dans lequel chacune des bandes de fixation est formée intégralement avec l'un des membres de tension principaux (12); et
dans lequel
chacun des membres de tension principaux (12) comprend un pli le long d'un du bord supérieur (121) ou du bord inférieur (122) pour définir la bande de fixation fixée le long de cela;
dans lequel
le produit gonflable (1) comprend en outre une feuille d'enveloppe s'étendant entre la première paroi (111) et la seconde paroi (112) et le long d'un bord périphérique de chacun de la première paroi (111) et de la seconde paroi (112) pour définir une chambre d'air (11) entre la première paroi (111) et la seconde paroi (112);
dans lequel
le produit gonflable (1) comprend en outre un premier membre oblique de tension (15) s'étendant entre deux bords opposés, avec les deux bords opposés du premier membre oblique de tension (15) étant respectivement fixés à la feuille d'enveloppe (113) et à la première paroi (111) définissant un premier angle (a) entre la première paroi (111) et le premier membre oblique de tension (15), avec le premier angle (a) étant un angle aigu; et
**caractérisé en ce qu'**un second membre de tension oblique (16) s'étend entre deux côtés opposés, avec les deux bords opposés du deuxième membre de tension oblique (16) respectivement étant fixé à la feuille d'enveloppe (113) et à la deuxième paroi (112) définissant un deuxième angle (β) entre la seconde paroi (112) et le seconde élément de tension oblique (16), avec le seconde angle (β) étant un angle aigu.

2. Le produit gonflable selon la revendication 1, dans lequel
le bord supérieur de chacun des membres de tension principaux (12) comporte une des bandes de fixation s'étendant le long de celui-ci pour former une soudure de bord supérieur (121);
le bord inférieur de chacun des membres de tension principaux (12) comporte l'une des bandes de fixation s'étendant le long de celui-ci pour former une soudure de bord inférieur(122); et
l'une des bandes de fixation formant la soudure de bord supérieur (121) est située à un même côté du correspondant des membres de tension principaux comme celui des bandes de fixation formant la soudure de bord inférieur (122).

3. Le produit gonflable selon la revendication 1, dans lequel
le bord supérieur de chacun des membres de tension principaux (12) comporte l'une des bandes de fixation s'étendant le long de celui-ci pour former une soudure de bord supérieur(121),
le bord inférieur de chacun des membres de tension principaux (12) comporte l'une des bandes de fixation s'étendant le long de celui-ci pour former une soudure de bord inférieur (122); et
celle des bandes de fixation formant la soudure de bord supérieur (121) est située à un côté opposé du correspondant des membres de tension principaux (12) que celle des bandes de fixation formant la soudure de bord inférieur (122).

4. Le produit gonflable selon la revendication 1, dans lequel chacune de la première région de raccordement et de la seconde région de raccordement des membres de tension de branche (14) forme un raccordement en relief avec celle de la première paroi (111) ou de la seconde paroi (112), le raccordement en relief étant visible pour un utilisateur du produit gonflable.

5. Le produit gonflable selon la revendication 1, dans lequel la première région de raccordement et la seconde région de raccordement sont reliées à celle de la première paroi (111) ou de la seconde paroi (112) avec une soudure ondulée s'étendant le long de la longueur d'un correspondant des membres de tension principaux (12), la soudure ondulée étant visible pour un utilisateur du produit gonflable et définissant un motif régulier s'étendant le long et oscillant transversalement à la longueur du correspondant des membres de tension principaux.

6. Le produit gonflable selon la revendication 5, dans lequel les soudures ondulées formées le long de la première région de raccordement et de la seconde région de raccordement d'un membre commun des membres de tension de branche (14) sont opposées en phase.

7. Le produit gonflable selon la revendication 5, dans lequel les soudures ondulées adjacentes formées le long des régions de raccordement adjacentes de celles différentes des membres de tension de branche sont opposées en phase.

8. Le produit gonflable selon la revendication 1, dans lequel les membres de tension de branche (14) sont en forme de feuilles plates, généralement minces.

9. Le produit gonflable selon la revendication 1, dans lequel la première région de raccordement et la seconde région de raccordement sont disposées symétriquement par rapport à la troisième région de raccordement.

10. Le produit gonflable selon la revendication 1, dans lequel chaque membre de tension de branche (14) de la pluralité de membres de tension de branche (14) comprend un membre de tension de branche supérieur (13) disposé sur le bord supérieur de chaque membre de tension principaux (12) et un membre de tension de branche inférieur disposé sur le bord inférieur de chaque membre de tension principaux (12);
chacun des membres de tension de branche supérieure (13) comprenant la première région de raccordement et la seconde région de raccordement avec chacune fixée à la première paroi; et
chacun des membres de tension de branche inférieur (14) comprenant la première région de raccordement et la seconde région de raccordement avec chacune fixée à la seconde paroi.
